(19) Europäisches Patentamt / European Patent Office / Office européen des brevets

(11) **EP 2 794 715 B1**

(12) # EUROPÄISCHE PATENTSCHRIFT

(45) Veröffentlichungstag und Bekanntmachung des Hinweises auf die Patenterteilung:
**30.09.2015 Patentblatt 2015/40**

(51) Int Cl.:
***C08G 63/183*** *(2006.01)*     ***C08G 63/80*** *(2006.01)*
***C08G 63/181*** *(2006.01)*

(21) Anmeldenummer: **12809760.7**

(22) Anmeldetag: **18.12.2012**

(86) Internationale Anmeldenummer:
**PCT/EP2012/075905**

(87) Internationale Veröffentlichungsnummer:
**WO 2013/092554 (27.06.2013 Gazette 2013/26)**

(54) **VERFAHREN ZUR FESTPHASEN-POLYKONDENSATION**

METHOD FOR FIXED PHASE POLYCONDENSATION

PROCÉDÉ DE POLYCONDENSATION EN PHASE SOLIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2011 EP 11195069**

(43) Veröffentlichungstag der Anmeldung:
**29.10.2014 Patentblatt 2014/44**

(73) Patentinhaber: **Polymetrix AG**
**9245 Oberbüren (CH)**

(72) Erfinder: **CHRISTEL, Andreas**
**CH-9524 Zuzwil (CH)**

(74) Vertreter: **Hepp Wenger Ryffel AG**
**Friedtalweg 5**
**9500 Wil (CH)**

(56) Entgegenhaltungen:
**EP-A2- 0 284 544     EP-A2- 0 810 250**
**WO-A1-2005/087838     DE-A1-102004 041 370**
**DE-A1-102005 016 146     US-A- 4 532 319**

**Beschreibung**

Die vorliegende Erfindung betrifft ein Verfahren zur Festphasen-Polykondensation von Polyestern, insbesondere von Polyethylenterephthalat beziehungsweise Copolymeren davon.

Polyester werden üblicherweise durch eine Polykondensationsreaktion aus entsprechenden Monomeren (vor allem Dicarbonsäuren und Diolen) in der Schmelze hergestellt. Prozessbedingt kann mit der Schmelz-Polykondensation nur ein Polyester mit einem bestimmten maximalen Molekulargewicht hergestellt werden. Um Polyester mit einem für verschiedene technische Anwendungen erforderlichen höheren Molekulargewicht herzustellen, wird der aus der Schmelzpolykondensation erhaltene niedermolekulare Polyester (auch als Prepolymer bezeichnet) einer Festphasen-Polykondensation unterzogen. In der festen Phase kommt es im Wesentlichen zu keinem thermischen Abbau des Polymers.

Bei der Festphasen-Polykondensation (auch als solid state polycondensation oder kurz SSP bezeichnet) wird der niedermolekulare Polyester auf eine Temperatur von 180°C bis maximal 5°C unterhalb seines Schmelzpunktes erhitzt. Die SSP-Reaktion ist in der Literatur ausführlich beschrieben (z.B. Scheirs/Long (Hrsg.), Modern Polyesters, Wiley 2003, isb. S. 153-244).

Da die SSP-Reaktion eine Gleichgewichtsreaktion ist, müssen zum Erreichen eines gewünschten hohen Molekulargewichts des Polyesters die Nebenprodukte aus der SSP-Reaktion (Wasser, Monomere wie Ethylenglykol, Nebenprodukte wie Acetaldehyd oder Oligomere) wirksam aus dem Reaktionsbehälter entfernt werden. Die Entfernung dieser Nebenprodukte erfolgt durch Anlegen eines Vakuums oder mit Hilfe eines durch den Reaktionsbehälter strömenden Inertgases wie Stickstoff, welches die Nebenprodukte aus dem Reaktionsbehälter heraus trägt.

Beide Verfahren weisen Nachteile auf. Für eine effiziente Entfernung der Nebenprodukte aus dem Reaktionsbehälter ist eine grosse Menge an Inertgas erforderlich, die durch den Reaktionsraum geführt werden muss. Im Stand der Technik sind zwar R-Werte von 0,1 bis 0,6 oder 0,7 offenbart (US-3,756,990; EP-0 810 250 B1), wobei der R-Wert als das Verhältnis von stündlich durch den Reaktionsraum strömender Gasmenge zu stündlich durch den Reaktionsraum strömender Polymermenge definiert ist. In der Regel werden jedoch weit höhere R-Werte herangezogen. In der US-4,876,326 ist eine SSP-Reaktion offenbart, bei welcher unter spezifischen Bedingungen (pulsierender Gasstrom, insbesondere aber die Verwendung eines Polymers in Form poröser Pillen) mit einem tieferen R-Wert gearbeitet werden kann. Dieses Verfahren ist aber auf die dort beschriebenen spezifischen Bedingungen eingeschränkt und nur beschränkt anwendbar. Die im Stand der Technik als erforderlich offenbarten Gasmengen sind somit so gross, dass aus Kostengründen (ein Verlust einer derart grossen Menge an Inertgas ist wirtschaftlich nicht akzeptabel) eine aufwendige Gasreinigung vorgesehen werden muss.

Für eine effiziente Entfernung der Nebenprodukte durch Anlegen eines Vakuums müssen ausreichend hohe Vakuumbedingungen im Reaktionsraum erzeugt und aufrechterhalten werden. Laut Scheirs/Long (Hrsg.), Modern Polyesters, Wiley 2003, S. 234, ist der tiefste mögliche Druck im Reaktionsraum erforderlich; normalerweise wird bei einem Druck von 0,2 mbar gearbeitet. In der WO 2007/116022 ist die Durchführung einer SSP-Reaktion unter Bedingungen von 0,01 bis 1 mbar offenbart. In der US-3,960,817 wird eine SSP-Reaktion bei Drücken von weniger als 1 Torr (d.h. weniger als 1,33 mbar) beschrieben. Analog wird in der WO 2004/106025 eine SSP-Reaktion bei Drücken von unterhalb 1 mbar durchgeführt. Diesen Verfahren aus dem Stand der Technik ist gemeinsam, dass eine aufwendige und teure Vakuum-Technologie zum Erreichen und Aufrechterhalten der erforderlichen tiefen Drücke im Reaktionsraum erforderlich ist. Da wegen der einzustellenden tiefen Drücke nur sehr geringe Menge an Inertgas durch den Reaktionsraum strömen können, kann es zur Kondensation der Nebenprodukte und dadurch ausgelöste Korrosions- und Blockierprobleme in der Vakuumpumpe kommen.

Es bestand die Aufgabe der vorliegenden Erfindung, die vorstehend geschilderten Probleme aus dem Stand der Technik zu überwinden.

Gemäss der vorliegenden Erfindung wurde überraschend gefunden, dass sich die bekannte SSP-Reaktion von Polyestern effizient und kostengünstiger betreiben lässt, wenn eine Kombination aus moderatem Vakuum und geringem Fluss von Inertgas durch den Reaktionsraum verwendet wird.

Die vorliegende Erfindung betrifft somit ein Verfahren zur Festphasen-Polykondensation von Polyestern, vorzugsweise Polyethylenterephthalat beziehungsweise Copolymeren davon, dadurch gekennzeichnet, dass die Festphasen-Polykondensation mit Poly-esterprepolymerpartikeln in einem Reaktionsraum durchgeführt wird, in welchem ein Absolutdruck im Bereich von 10 mbar bis 200 mbar, vorzugsweise 20 bis 150 mbar, und ein Prozessgasfluss im Bereich eines R-Wertes von 0,005 bis 0,05 herrscht.

Der R-Wert ist definiert als das Verhältnis von stündlich durch den Reaktionsraum strömender Prozessgasmenge (in kg) zu stündlich durch den Reaktionsraum strömender Polymermenge (in kg):

$$R = \frac{m(Gas)/h}{m(Polymer)/h}$$

Im Stand der Technik wurden zur Durchführung einer SSP-Reaktion unter herkömmlichen, generalisierbaren Bedingungen bislang R-Werte von mindestens 0,1 als erforderlich angesehen, um die bei der SSP-Reaktion entstehenden Nebenprodukte effizient zu entfernen und das Reaktionsgleichgewicht zur Produktseite (d.h. zu Polymeren mit höherem Molekulargewicht) zu verschieben. Wie vorstehend ausgeführt müssen hierbei immer noch derart grosse Mengen an Inertgas durch den Reaktionsraum zirkuliert werden, dass deren Verlust wirtschaftlich nicht hinnehmbar ist. Entsprechend müssen aufwendige Gasreinigungsschritte bereitgestellt und durchgeführt werden.

Bei dem erfindungsgemässen Verfahren kann hingegen mit deutlich niedrigeren R-Werten und somit deutlich geringeren Gasmengen gearbeitet werden. Die aufgrund der verringerten Gasmenge reduzierte Entfernung von Nebenprodukten aus dem Reaktionsraum durch das Inertgas wird durch das gleichzeitige Anlegen eines moderaten Vakuums kompensiert. Es hast sich gezeigt, dass eine ausreichende Entfernung von Nebenprodukten bereits dann gegeben ist, wenn man zusätzlich zu dem vorstehend beschriebenen Gasstrom durch den Reaktionsraum mit einem R-Wert im Bereich von 0,005 bis 0,05 ein derartiges Vakuum an den Reaktionsraum anlegt, dass dort ein Absolutdruck von im Bereich von 10 mbar bis 200 mbar, vorzugsweise 20 bis 150 mbar herrscht.

Aufgrund der Tatsache, dass an die SSP-Apparatur ein geringeres Vakuum angelegt werden muss als bislang im Stand der Technik beschrieben, verringert sich der apparative Aufwand zur Herstellung und Beibehaltung des Unterdrucks bzw. Vakuums.

Beim erfindungsgemässen Verfahren wird eine ausreichend grosse Menge an Prozessgas durch den Reaktionsraum geleitet, dass sich das Risiko einer Auskondensation von Nebenprodukten aus dem Abgas durch Übersättigung erheblich verringert beziehungsweise dieses Risiko nicht mehr vorhanden ist.

Gemäss einer besonders bevorzugten Ausführungsform der vorliegenden Erfindung wird das Verfahren unter Bedingungen eines Gasflusses durch den Reaktionsraum und eines Vakuums im Prozessraum durchgeführt wird, dass sich ein S-Wert von mindestens 0,3/bar, vorzugsweise mindestens 0,8/bar ergibt. Der S-Wert ist hierbei wie folgt definiert:

$$S = \frac{R}{Absolutdruck(bar)} = \frac{m(Gas)/h}{m(Polymer)/h \cdot Absolutdruck(bar)}$$

Die vorliegende Erfindung wird nachstehend im Detail unter Bezugnahme auf nicht einschränkende Figuren und Beispiele näher erläutert.

Fig. 1 ist eine graphische Darstellung des Zusammenhangs zwischen R-Wert und Absolutdruck in der erfindungsgemässen SSP-Reaktion.

Fig. 2 ist eine erste Ausführungsform einer erfindungsgemässen Apparatur.

Fig. 3 ist eine zweite Ausführungsform einer erfindungsgemässen Apparatur.

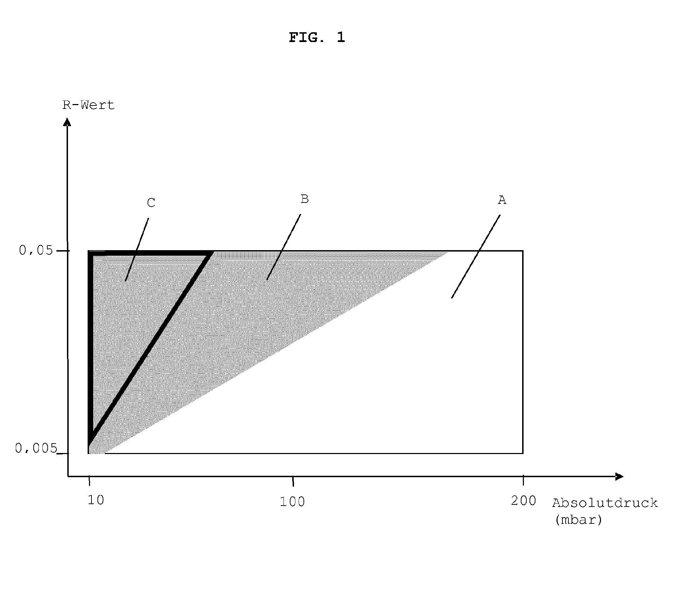

In Fig. 1 sind die erfindungsgemäss verwendbaren Prozessbereiche graphisch veranschaulicht. Der rechteckige Bereich beschreibt das Prozessfenster A mit einem R-Wert von 0,005 bis 0,05 und einem Absolutdruck von 10 mbar bis 200 mbar, in welchem das erfindungsgemässe Verfahren durchgeführt werden kann. Innerhalb dieses Fensters ist der durch das graue Dreieck gekennzeichnete Vorzugsbereich B enthalten, in welchem der S-Wert mindestens 0,3/bar beträgt (definiert durch einen R-Wert von 0,005 bei einem Absolutdruck von 16,7 mbar und einem R-Wert von 0,05 bei einem Absolutdruck von 166,7 mbar). Innerhalb dieses grauen Dreiecks befindet sich der erfindungsgemäss besonders bevorzugte Bereich C, in welchem der S-Wert mindestens 0,8/bar beträgt (definiert durch einen R-Wert von 0,008 bei einem Absolutdruck von 10 mbar und einem R-Wert von 0,05 bei einem Absolutdruck von 62,5 mbar).

Das erfindungsgemässe Verfahren dient zur Herstellung eines Polyesters, wobei insbesondere die Herstellung von Polyethylenterephthalat oder eines seiner Copolymere bevorzugt ist.

Bei Polyestern handelt es sich um kristallisierbare, thermoplastische Polykondensate, wie zum Beispiel Polyethylenterephthalat (PET), Polybutylenterephthalat (PBT), Polytrimethylterephthalat (PTT), Polyethylennaphthalat (PEN), Polytrimethylnaphthalat (PTN), Polyhydroxyalkanoate oder Polylaktide, die entweder als Homopolymer oder als Copolymere vorliegen. Polyester werden durch Polykondensation aus ihren Monomeren, üblicherweise einer Diol-Komponente (z.B. lineare oder cyclische Diol-Komponenten mit 2 bis 10 C-Atomen) und einer Dicarbonsäure-Komponente (z.B. aromatische Dicarbonsäure-Komponenten mit üblicherweise 1 bis 3 aromatischen Ringen) gewonnen. Anstelle der Dicarbonsäure kann auch ihr entsprechender Di-Ester, insbesondere Dimethylester eingesetzt werden. Anstelle von Diol- und Dicarbonsäure-Komponenten können auch Komponenten mit zumindest einer Carbonsäure- und einer Alkoholgruppe (z.B. mit der Formel

$$HO\text{-}CH(R)\text{-}(CH_2)_n\text{-}COOH,$$

wobei R üblicherweise einen aliphatischen Kohlenwasserstoff mit 1 bis 15 Kohlenstoffatomen darstellt und n = 0 bis 10, üblicherweise 0 bis 3 beträgt) als Monomere verwendet werden.

Bei der Polykondensationsreaktion kommt es zur Abspaltung eines niedermolekularen Reaktionsproduktes. Die Polykondensation kann direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist der so gewonnene Polyester linear, wobei eine geringe Anzahl an Verzweigungen entstehen kann. Bei dem Polyester kann es sich um ein Neumaterial oder um ein Rezyklat handeln.

Dem Polyester können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriereeigenschaften oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Als Katalysatoren kommen metallischen Elementen, wie zum Beispiel Antimon, Germanium, Aluminium oder Titan oder auch Mangan, Kobalt, Zink, Zinn oder Kalzium zum Einsatz. Der Gehalt der metallischen Elemente im Polyester liegt üblicherweise zwischen 5 und 400 ppm, wobei ein Antimongehalt zwischen 20 und 300ppm, ein Germaniumgehalt zwischen 10 und 150ppm, ein Aluminium-, Mangan-, Kobalt-, Zink-, Zinn- oder Kalziumgehalt zwischen 10 und 200ppm oder ein Titangehalt zwischen 5 und 20ppm bevorzugt ist.

Ein vor allem zur Herstellung von Hohlkörpern, wie zum Beispiel Flaschen, häufig verwendeter Polyester ist Polyethylenterephthalat (PET). Polyethylenterephthalat wird durch Polykondensation unter Abspaltung niedermolekularer Reaktionsprodukte aus seinen Monomeren, einer Diol-Komponente und einer Dicarbonsäure-Komponente, gewonnen. Dabei besteht die Diol-Komponenten mehrheitlich, insbesondere zu mehr als 90 mol-%, aus Ethylenglykol (1,2 Ethandiol) und die Dicarbonsäure-Komponenten mehrheitlich, insbesondere zu mehr als 90 mol-%, aus Terephthalsäure, wobei der Comonomergehalt insgesamt üblicherweise zwischen 1 und 15 mol-% insbesondere zwischen 2 und 10 mol-% liegt. Anstelle der Terephthalsäure kann auch ihr entsprechender Di-Ester, insbesondere Dimethylester eingesetzt werden. Der Comonomergehalt entspricht dabei der Summe des Diol-Comonomergehaltes und des Dicarbonsäure-Comonomergehaltes. Der Diol-Comonomergehalt wird bestimmt als Anzahl mol der Diol-Comonomere bezogen auf die gesamte Anzahl mol der Diole. Der Dicarbonsäure-Comonomergehalt wird bestimmt als Anzahl mol der Dicarbonsäure-Comonomere bezogen auf die gesamte Anzahl mol der Dicarbonsäuren. Als Comonomere kommen weitere lineare, zyklische oder aromatische Diol- und Dicarbonsäureverbindungen in Frage. Typische Comonomere sind Diethylenglykol (DEG), Isophthalsäure (IPA) oder 1,4-Bishydroxymethyl-cyclohexan (CHDM). Als niedermolekulare Reaktionsprodukte entstehen zum Beispiel Wasser, Ethylenglykol, Acetaldehyd, Methanol, sowie allfällige weiter Diole.

Zur Herstellung von Polyesterprepolymerpartikeln wird zunächst eine Polyester-Prepolymerschmelze hergestellt, die dann abgekühlt und zu Partikeln geformt wird. Die Herstellung der Polyester-Prepolymerschmelze erfolgt dabei durch Polykondensation der Monomere in flüssiger Phase (Schmelzephasenpolykondensation). Üblicherweise erfolgt die Herstellung der Polykondensatschmelze in einem kontinuierlichen Prozess. Dabei finden üblicherweise zunächst eine Stufe zur Vermischung von Monomeren (Pastenherstellung), eine Veresterungsstufe und dann eine Pre-Polykondensationsstufe unter Vakuum statt. Im konventionellen Polyesterherstellprozess folgt ebenfalls unter Vakuum eine Polykondensationsstufe im Hochviskositätsreaktor (auch Finisher genannt). Dadurch entsteht ein Prepolymer mit einer intrinsischen Viskosität typischerweise zwischen 0.35 dl/g und 0.8 dl/g, insbesondere mit über 0.5 dl/g und mit unter 0.75 dl/g. Die Polyesterherstellung kann auch in einem Batch-Prozess erfolgen. Dies alles ist hinlänglich bekannt (vgl. z.B. Scheirs/Long (Hrsg.), Modern Polyesters, Wiley 2003, Kapitel 2.4.1).

Alternativ kann die oben erwähnte Polykondensationsstufe im Hochviskositätsreaktor weggelassen werden. Dadurch entsteht ein niedrigviskoses Polyester-Prepolymer mit einer intrinsischen Viskosität typischerweise zwischen 0.2 dl/g und 0.5 dl/g, insbesondere mit über 0.3 dl/g und mit unter 0.45 dl/g.

Die Herstellung der Polyester-Prepolymerschmelze erfolgt alternativ auch durch Aufschmelzen von Polyestern als Rohprodukt. Dies kann zum Beispiel durch einen kontinuierlichen Kneter oder Extruder oder auch in einem Polymerisationsreaktor erfolgen. Die Polyester liegen dabei in fester Form vor, zum Beispiel als Granulate, Pulver oder Schnitzel. Üblicherweise ist es vorteilhaft, Polyester vor dem Aufschmelzen zu trocknen. Nach dem Aufschmelzen kann optional ein weiterer Polykondensationsschritt erfolgen. Ebenso kann durch Aufschmelzen und Depolymerisieren ein bereits höher viskoser Polyester auf ein niedrigeres Viskositätsniveau gebracht werden. Die Polyester-Prepolymerschmelze kann auch aus einem Gemisch aus frisch polymerisiertem und aufgeschmolzenem Polyester hergestellt werden, wobei aufgeschmolzener Polyester dem frisch polymerisierten Polyester am Ende der Polymerisationsstrecke oder einem Zwischenschritt zugefügt werden kann. Besonders wenn rezyklierte Polyester aufgeschmolzen werden, ist es vorteilhaft die Schmelze vor dem zusammenfügen mit frisch polymerisierter Schmelze durch eine inline oder online Messung auf Qualitätsmerkmale, wie zum Beispiel Viskosität oder Farbe zu prüfen, um allfällig minderwertige Produkte, zum Beispiel zu einer separaten Granuliervorrichtung, abzuzweigen und dadurch eine Verunreinigung von Neumaterial zu verhindern. Die inline-Messung erfolgt dabei direkt im aufgeschmolzenen PrePolymer. Die online-Messung kann in einem Seitenstrom der Schmelze oder an einem daraus hergestellten Probekörper, Strang, Band, Granulat oder dergleichen erfolgen.

Üblicherweise wird die Polyester-Prepolymerschmelze einer Filtration unterzogen, um feste Verunreinigungen zu eliminieren, wobei je nach Viskosität Siebe mit Maschenweiten zwischen 5 und 150 μm zum Einsatz kommen.

Erfindungsgemäss wird eine Polyester-Prepolymerschmelze mit einer intrinsischen Viskosität von zwischen 0.35 und 0.80 dl/g, bevorzugt von über 0.45 dl/g, insbesondere von über 0.5 dl/g und bevorzugt von unter 0.75 dl/g, insbesondere von unter 0.70 dl/g, hergestellt. Die intrinsische Viskosität (IV) gibt dabei die Lösungsviskosität an und wird nach folgender Vorschrift bestimmt:

Zur Messung der Lösungsviskosität wird eine Mischung aus Phenol/Dichlorbenzol (50 : 50 Gew.-%) als Lösungsmittel benutzt. Die Polyesterprobe wird während 10 Minuten bei 130°C mit einer Konzentration von 0.5% (0.5 g/dl) aufgelöst. Die Messung der relativen Viskosität (R.V.) wird bei 25°C mit einem Ubbelohde-Viskosimeter (nach DIN Anweisung Nr. 53728, Teil 3 vom Januar 1985) durchgeführt.

Die relative Viskosität ist der Quotient aus der Viskosität der Lösung und der Viskosität des reinen Lösungsmittels, welcher mit dem Verhältnis der entsprechenden Kapillardurchflussgeschwindigkeit vergleichbar ist. Mit der Gleichung von Huggins wird der Wert der intrinsischen Viskosität aus der gemessenen relativen Viskosität berechnet:

$$I.V. = \frac{\sqrt{1 + 4 K_H (R.V. - 1)} - 1}{2 * c * K_H}$$

Mit den obigen Messmethoden (Polymerkonzentration C=0,5 g/dl und der Huggins Konstante $K_H$=0.35) ergibt sich die Gleichung:

$$I.V. = \frac{\sqrt{1 + 1.4 (R.V. - 1)} - 1}{0.35} \quad \text{(dl/g)}$$

Die Viskosität des Polyesters kann entweder als intrinsische Viskosität (IV) oder als mittleres Molekulargewicht (Zahlenmittel Mn) angegeben sein. Zur Umrechnung eines IV-Wertes gemessen in Phenol: Dichlormethan = 1: 1 in das mittlere Molekulargewicht wird die Gleichung

$$IV = k * Mn^a$$

verwendet, wobei k=2.1·10$^{-4}$ und a=0.82 ist.

Diese Gleichung ist allgemein auf publizierte Daten anwendbar, wenn nicht explizit ein anderes Lösemittelgemisch und die dazu gehörenden Umrechnungsfaktoren gegeben sind.

Aus dem mittleren Molekulargewicht lässt sich die Endgruppenkonzentration (EGN) berechnen mit der Gleichung:

$$EGN = \frac{2 \cdot 10^6}{Mn}$$

wobei Mn in g/mol eingesetzt wird und EGN in mol/t resultiert.

Mittels der Carboxylendgruppenkonzentration ($c_{COOH}$) und der Endgruppenkonzentration lässt sich der Gehalt der einzelnen Endgruppen berechnen, wobei zur Vereinfachung nur die Präsenz von Hydroxyl- und Carboxylendgruppen berücksichtigt wird, womit EGN = $c_{COOH}$ + $c_{OH}$ wird.

$$\text{Carboxylendgruppengehalt } X_{COOH} = c_{COOH} / EGN;$$

$$\text{Hydroxylendgruppengehalt } X_{OH} = c_{OH} / EGN = (1 - X_{COOH})$$

Dabei bezeichnet $c_{COOH}$ die Konzentration an Carboxylendgruppen in mol/t und $c_{OH}$ die Konzentration an Hydroxylendgruppen in mol/t.

Gemäss einer bevorzugten Ausführung der vorliegenden Erfindung werden die Mengen der Diol-Komponenten und der Dicarbonsäure-Komponenten sowie die Bedingungen im Pre-Polyester-Herstellungsprozess so gewählt, dass ein Pre-Polyester mit einem Carboxylendgruppengehalt von zwischen 0.25 und 0.6, entsteht, wobei der Carboxylendgruppengehalt bevorzugt über 0.30, insbesondere über 0.35, und bevorzugt unter 0.55, insbesondere unter 0.5, liegt.

Die Partikel können aus der Polyester-Prepolymerschmelze auf verschiedene Arten geformt werden. Anwendbar ist ein Zerkleinern von Brocken, Strängen oder Bändern, die aus der Polymerschmelze geformt wurden, oder ein direktes Formen von Partikeln zum Beispiel durch Vertropfen oder Zerstäuben. Das Abkühlen und Formen der Polyester-Prepolymerschmelze erfolgt üblicherweise durch Granulation. Bei der Granulation wird die Polyester-Prepolymerschmelze z.B. durch eine Düse mit einer Öffnung (Loch) oder einer Vielzahl von Öffnungen gepresst und geschnitten oder vertropft. Die Düsenöffnungen sind üblicherweise rund, können aber auch ein anderes Profil, wie z.B. schlitzförmige Öffnungen darstellen. Es ist darauf zu achten, die Produktflussmenge pro Düsenloch zeitlich und örtlich in einem engen Bereich zu halten, wobei die Standardabweichung der einzelnen Produktflussmengen zwischen 0.1 und 10% gehalten werden soll. Um dies zu erreichen, kann je nach Position eines Düsenloches deren Durchmesser oder Länge variiert sein. Gleichzeitig ist auf möglichst gleichmässige Anströmbedingungen (Druck, Geschwindigkeit, Temperatur, Viskosität usw.) der einzelnen Düsenlöcher zu achten. Das Schneiden kann sowohl direkt am Düsenaustritt erfolgen oder aber erst nach Durchlaufen einer Behandlungsstrecke.

Durch Abkühlung wird die Polyester-Prepolymerschmelze verfestigt. Dies kann mit Hilfe eines flüssigen Kühlmediums (z. B. Wasser, Ethylenglykol) oder gasförmigen Kühlmediums (z. B. Luft, Stickstoff, Wasserdampf) erfolgen, oder durch Kontakt mit einer kalten Oberfläche, wobei auch Kombinationen der Kühlmedien denkbar sind. Die Abkühlung kann sowohl gleichzeitig, wie auch vor oder nach dem Formen zu Partikeln stattfinden. Wird ein flüssiges Kühlmedium verwendet, so muss dieses abgetrennt werden, was zum Teil über einfache Abscheider, wie Siebe oder Roste, erfolgt und zusätzlich durch Zentrifugalkraft, zum Beispiel in einem Zentrifugaltrockner, durch einen Aufprall, zum Beispiel in einem Pralltrockner, und/oder durch einen Gasstrom erfolgen kann.

Bekannte Granulationsprozesse sind zum Beispiel Rotoformen, Stranggranulation, Wasserringgranulation, Unterwassergranulation oder Kopfgranulation (auch hot face - Granulation), sowie Vertropfen oder Zerstäuben. Solche Verfahren sind z.B. in der WO 00/23497, WO 01/05566, WO 05/087838, WO 03/054063 sowie WO 96/22179 beschrieben.

Die mittlere Granulatgrösse soll zwischen 0.1mm und 10mm, bevorzugterweise zwischen 0.5mm und 3mm und insbesondere zwischen 0.85 und 2.5mm liegen. Als mittlere Granulatgrösse gilt der statistische Mittelwert des mittleren Granulatdurchmessers, der sich aus dem Durchschnitt aus Granulathöhe, -länge und -breite ergibt. Die Granulatgrössenverteilung soll in einem engen Spektrum gehalten werden. Bevorzugt ist die Standardabweichung der Granulatgewichte von 100 gemessenen Granulaten zwischen 2 und 20%. Die Granulate können eine definierte Granulatform, wie zum Beispiel zylinderförmig, kugelförmig, tropfenförmig, kugelähnlich oder eine Design-Form, wie sie zum Beispiel in EP0541674B1 vorgeschlagen ist, aufweisen. Es können solide Granulate oder poröse Granulate, die zum Beispiel durch Schäumung, Sinterung und dergleichen gewonnen werden, verwendet werden.

Die Abkühlung kann auf eine Temperatur, die unterhalb der Glasübergangstemperatur des Polyesters liegt, erfolgen, was die Lagerung und/oder den Transport der Granulate über einen längeren Zeitraum erlaubt. Die durchschnittliche Temperatur der Pre-Polyestergranulate kann aber auch auf einem höheren Niveau gehalten werden, um die Energieeffizienz der nachfolgenden Prozesse zu verbessern. Dazu ist es möglich, die Temperatur des Kühlmediums anzuheben und/oder die Verweilzeit im Kühlmedium entsprechend kurz zu wählen.

Obwohl eine teilweise Kristallisation bereits während der Herstellung der Polyester-Pre-Polymerpartikel erfolgen kann, ist üblicherweise ein Schritt zur Kristallisation notwendig, um teilkristalline Polyester Pre-Polymerpartikel zu erhalten. Die Kristallisation kann eigenständig oder gekoppelt mit der Partikelherstellung stattfinden. Mehrere Vorrichtungen zur Herstellung von Partikeln können mit einer Kristallisationsvorrichtung verbunden sein. Die Kristallisation kann in einem Schritt oder in mehreren Schritten und somit in einem oder in mehreren hintereinander folgenden Vorrichtungen stattfinden. Die Kristallisation kann kontinuierlich oder batchweise erfolgen. Optional kann die Kristallisation in zwei oder mehreren parallel betriebenen Vorrichtungen erfolgen.

Die Kristallisation erfolgt nach den im Stand der Technik bekannten Verfahren, zum Beispiel durch thermische Kristallisation, durch lösemittelinduzierte Kristallisation oder durch Kristallisation durch mechanische Verstreckung. Bevorzugt erfolgt die Kristallisation auf thermischem Weg, wodurch ein thermisch teilkristallisiertes Polykondensat entsteht. Die Kristallisation soll bei einer geeigneten Temperatur über eine geeignete Verweilzeit erfolgen. Durch die Kristallisation soll zumindest ein Kristallisationsgrad erreicht werden, der eine weitere thermische Behandlung, wie zum Beispiel eine Trocknung oder eine Festphasen-Polykondensation erlaubt, ohne dass es dort zu Verklebungen oder Klumpenbildungen kommt.

Der geeignete Temperaturbereich wird ersichtlich, wenn man die Kristallisationshalbwertszeit ($t_{1/2}$) gemessen im DSC als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit $t_{1/2min}$ erreicht. Da

sehr kurze Kristallisationshalbwertszeiten ($t_{1/2}$) nur schwer bestimmbar sind, wird als Minimalwert $t_{1/2min}$ = 1 Minute eingesetzt. Die geeignete Kristallisationszeit ergibt sich aus der Zeit, um das Produkt auf die Kristallisationstemperatur aufzuheizen, plus zumindest der Kristallisationshalbwertszeit bei der gegebenen Temperatur, wobei bevorzugt 2 - 20 Halbwertszeiten zur Aufheizzeit dazugezählt werden, um eine ausreichende Kristallisation zu erreichen.

Um ein Verkleben der kristallisierenden Prepolymerpartikel zu verhindern, sollen diese relativ zueinander in Bewegung gehalten werden. Geeignete Kristallisationsreaktoren sind vibrierende Reaktoren, drehende Reaktoren, Reaktoren mit Rührwerken, sowie Reaktoren die von einem Prozessgas durchströmt werden, wobei die Strömungsgeschwindigkeit des Prozessgases ausreichen muss, um die Pre-Polymerpartikel zu bewegen. Bevorzugt sind Strömungsgeschwindigkeiten im Bereich von 1 - 6 m/s, insbesondere grösser als 1.5 m/s und kleiner als 4 m/s. Die Gasgeschwindigkeit entspricht dabei der Leerrohrgeschwindigkeit, also der Gasmenge pro Zeit geteilt durch den Querschnitt des Behandlungsraumes. Besonders geeignete Kristallisationsreaktoren sind Fliessbett- oder Wirbelbettkristallisatoren, da diese nicht zur Staubbildung neigen.

Bei Polyethylenterephthalat liegt der geeignete Temperaturbereich zwischen 100 und 220°C, und es wird in 5 bis 20 Minuten ein Kristallisationsgrad von zumindest 25%, bevorzugterweise von zumindest 30% erreicht.

Die Kristallisation kann aus dem Glaszustand, das heisst nach vorübergehender Abkühlung auf eine Temperatur unterhalb der Kristallisationstemperatur, insbesondere unterhalb der Glasübergangstemperatur Tg erfolgen. Geeignet sind auch Verfahren, bei denen die Kristallisation zumindest teilweise aus der Schmelze erfolgt, wobei ein Anstieg der Kristallinität während der Abkühlphase und/oder einer Haltephase bei erhöhter Temperatur erfolgt. Liegt die Temperatur der Polyester-Prepolymerpartikel beim Eintritt in den Kristallisationsprozess unterhalb der geeigneten Kristallisationstemperatur, so müssen die Polyester Prepolymerpartikel aufgeheizt werden. Dies kann zum Beispiel über eine beheizte Wand des Kristallisationsreaktors, über beheizte Einbauten im Kristallisationsreaktor, durch Strahlung oder durch das Einblasen eines heissen Prozessgases erfolgen.

Gleichzeitig mit dem Anheben des Kristallisationsgrades, werden auch allfällige Reste der Flüssigkeit aus dem Granulierprozess entfernt. Wird im Kristallisationsprozess ein Prozessgas im Kreislauf verwendet, so muss diesem genügend Frischgas oder gereinigtes Prozessgas zugesetzt werden, um eine übermässige Anreicherung mit Flüssigkeit oder anderen ausdiffundierenden Substanzen zu verhindern. Als Prozessgase können zum Beispiel Luft, Wasserdampf oder Inertgase wie Stickstoff, $CO_2$ oder Gemische daraus zum Einsatz kommen. Die Prozessgase können Additive enthalten, die entweder reaktiv auf das zu behandelnde Produkt einwirken oder sich passiv auf dem zu behandelnden Produkt ablagern.

Weitere Aggregate, wie Wärmetauscher, Separieraggregate, wie Filter oder Zyklone, Gasförderaggregate, wie Gebläse, Kompressoren oder Ventilatoren, Gasreinigungssysteme, wie Gaswäscher, Verbrennungssysteme oder Adsorptionssysteme, oder Armaturen, wie Klappen, Ventile oder Abzweigungen, können in den Prozessgaskreislauf integriert sein.

Optional können die Polyester-Prepolymerpartikel vor einer Kristallisation einer Behandlung zur Reduktion ihrer Klebeneigung unterzogen werden, wie dies in PCT/CH2008/000389 beschrieben ist.

Optional können die Polyester Prepolymerpartikel vor der Kristallisation erwärmt werden. Dies kann in einer Vorwärmstufe erfolgen, wobei die Wärmezufuhr aus einem späteren Kühlschritt stammen kann, wie dies in EP 01789469 B1 beschrieben ist. Alternativ kann die Wärme auch direkt für die Vorwärmstufe erzeugt werden oder durch Wärmerückgewinnung aus einer Wärmequelle aus einem Vorgelagerten Prozess der Schmelzephasenpolymerisation erfolgen. Bei der Herstellung von Polyethylenterephthalat lässt sich zum Beispiel der Dampf aus der Kolonne zur Trennung von Wasser und Ethylenglykol als Wärmequelle für die Vorwärmstufe verwenden.

Besonders geeignet Apparate zur Kristallisation sind Fliessbettapparate, wie diese zum Beispiel in der EP-1 425 146 A2 beschrieben sind. Das Erhitzen auf Kristallisationstemperatur und die anschliessende Kristallisation kann in einem oder mehreren Kristallisationsapparaten erfolgen. Die Grösse der benötigten Apparate wird dabei mit der Summe aller Flächen der Siebbleche der Apparate angegeben, wobei sich für eine Behandlung von 40 bis 100 t/h Siebbodenflächen von 10 bis 100m$^2$ ergeben. Bei der Kristallisation von kalten PET Granulaten sind Siebblechflächen von 20 bis 60m$^2$ notwendig.

Im Anschluss an die Kristallisation ist gegebenenfalls ein Schritt zum Erwärmen der teilkristallinen Polyester-Prepolymerpartikel auf eine geeignete Reaktionstemperatur notwendig, um erwärmte Polyester-Prepolymerpartikel zu erhalten. Das Erwärmen kann eigenständig oder gekoppelt mit der Kristallisation stattfinden. Mehrere Vorrichtungen zur Kristallisation können mit einer Vorrichtung zum Erwärmen verbunden sein. Das Erwärmen kann in einem Schritt oder in mehreren Schritten und somit in einem oder in mehreren hintereinander folgenden Vorrichtungen stattfinden. Das Erwärmen kann kontinuierlich oder batchweise erfolgen. Optional kann das Erwärmen in zwei oder mehreren parallel betriebenen Vorrichtungen erfolgen. Geeignete Vorrichtungen zum Erwärmen sind drehende Reaktoren, Reaktoren mit Rührwerken, sowie Reaktoren die von einem Prozessgas durchströmt werden.

Im Anschluss an das Erwärmen erfolgt die erfindungsgemässe SSP-Reaktion, um Polyester-Partikel mit einer intrinsischen Viskosität zwischen 0.70 und 0.95 dl/g, insbesondere über 0.75 dl/g zu erhalten. Dabei soll der Anstieg der intrinsischen Viskosität zumindest 0.05, insbesondere zumindest 0.1 dl/g betragen.

Die SSP-Reaktion der erwärmten Polyester-Prepolymerpartikel erfolgt vorzugsweise in einem geeigneten, im Wesentlichen vertikalen Reaktor. Erfindungsgemäss erfolgt die Zufuhr der erwärmten Polyester-Pre-Polymerpartikel in den oberen Teil des Reaktors, wodurch die Polyesterpartikel den Reaktor mittels Schwerkraft von oben nach unten durchfliessen. Die Polyesterpartikel durchfliessen den Reaktor dabei als Festbett, was auch als bewegtes Festbett bezeichnet wird. Dabei wird ein möglichst enges Verweilzeitspektrum der einzelnen Partikel angestrebt. Eine Verwirbelung oder anderweitig aktive Durchmischung der Partikel soll vermieden werden.

Die SSP-Reaktion erfolgt in einem Temperaturbereich von 180°C bis 5° unterhalb des kristallinen Schmelzpunktes der Polyesterpartikel, vorzugsweise 5° bis 80°C unterhalb des kristallinen Schmelzpunktes der Polyesterpartikel, wobei Temperaturen mit weniger als 60°C und/oder mit mehr als 20°C unterhalb des kristallinen Schmelzpunktes der Polykondensatpartikel bevorzugt sind. Durch das Reagieren und durch eine fortlaufende Kristallisation während der Reaktion kann die Temperatur der Polyesterpartikel um zwischen 1 und 20°C ansteigen, wobei auch die dadurch entstehende maximale Temperatur im Bereich der geeigneten Reaktionstemperatur liegen soll. Für Polyethylenterephthalat liegt die geeignete SSP-Reaktionstemperatur in einem Temperaturbereich von 190°C bis 240°C, wobei Temperaturen unter 225°C, insbesondere unter 220°C bevorzugt sind.

Die geeignete Reaktionszeit beträgt zwischen 2 und 30 Stunden, wobei aus wirtschaftlichen Gründen Verweilzeiten von weniger als 24 Stunden, insbesondere weniger als 20 Stunden, sowie von mehr als 6, vorzugsweise mehr als 8 Stunden bevorzugt sind.

Die vorliegende Erfindung betrifft weiterhin eine Apparatur zur Durchführung des vorstehend beschriebenen Verfahrens zur Festphasen-Polykondensation von Polyestern, vorzugsweise Polyethylenterephthalat beziehungsweise Copolymeren davon, umfassend einen Reaktor mit einem Materialeinlass in seinem Deckenbereich und einen Materialauslass im Bodenbereich, gegebenenfalls einer Prozessgaszuführleitung in den Bodenbereich des Reaktors, und einem an den Deckenbereich des Reaktors angeschlossenes Vakuumsystem, Vorlagebehälter vor dem Materialeinlass und nach dem Materialauslass des Reaktors, wobei der vor oder nach dem Materialauslass des Reaktors angeordnete Vorlagebehälter eine Prozessgaszuführleitung aufweist, wenn die Prozessgaszuführleitung am Reaktor nicht vorhanden ist, und Absperrvorrichtungen zwischen den Vorlagebehältern und dem Materialeinlass sowie dem Materialauslass des Reaktors sowie vor und nach den Vorlagebehältern.

Die erfindungsgemässe SSP-Reaktion findet in einem Reaktionsraum statt, der mit zumindest einem Vakuumsystem sowie mit einer Gaszuführleitung verbunden ist. Erfindungsgemäss bevorzugt ist das Vakuumsystem eine ein- oder zweistufige Vakuumanlage. Erfindungsgemäss können herkömmliche Vakuumsysteme wie Vakuumpumpen eingesetzt werden, wobei es ein Vorteil der vorliegenden Erfindung ist, dass keine Hochleistungsvakuumsysteme eingesetzt werden müssen, da lediglich Absolutdrücke von 10 bis 200 mbar im Reaktionsraum zu erreichen sind.

Der Reaktionsraum kann wie vorstehend beschrieben ein vertikaler Reaktor oder alternativ ein sich drehender horizontaler Reaktor sein. Derartige horizontale Reaktoren sind bekannt, z.B. aus der DE 102 25 075 A1.

Der Reaktor kann lediglich isoliert sein (wenn das Polyester-Prepolymer bereits auf die erforderliche Reaktionstemperatur gebracht wurde, bevor es in den Reaktor geführt wird). Zufuhrleitungen für die Polyesterpartikel können dabei in den Reaktor oder zumindest in die Isolation um den Reaktor eingebunden sein, wodurch sich Wärmeverluste aus der Förderleitung verringern lassen. Alternativ kann der Reaktor beheizbar sein. Die Beheizung des Reaktors kann über dessen Reaktormantel, über beheizte Einbauten im Reaktor oder über elektromagnetische Wellen (Mikrowellen- oder IR-Strahler) im Innern des Reaktors erfolgen.

Üblicherweise wird das Prozessgas am unteren Ende des Reaktors zugeführt und am oberen Ende des Reaktors entnommen, wodurch sich ein Prozessgasstrom im Gegenstrom zum Fluss der Polyesterpartikel ergibt. Umgekehrt ist aber auch ein Gleichstrom vom oberen Ende des Reaktors zum unteren Ende des Reaktors denkbar. Bei einem horizontal gelagerten Reaktor wird das Prozessgas üblicherweise an einem Ende zugegeben und am anderen Ende entnommen, wobei die Zugabe in Flussrichtung des Produktflusses (Gleichstrom) oder entgegengesetzt (Gegenstrom) erfolgen kann. Alternativ kann die Zugabe auch über mehrere Zugabestellen im Reaktormantel erfolgen, wodurch im Wesentlichen ein Kreuzstrom entsteht.

Der Reaktor kann Einbauten aufweisen, die zum Beispiel zur Vergleichmässigung der Strömungsverhältnisse, als Gaseintritt oder zur Reduktion des Produktdruckes dienen. Derartige Reaktoren sind zum Beispiel in den Schriften EP1337321B1, US6010667 und DE102007031653A1 beschrieben, die mit in die vorliegende Erfindung eingeschlossen werden.

Der Produktfluss der Polyester-Prepolymerpartikel in und aus dem Reaktor wird durch Absperrvorrichtungen, wie Zellradschleusen, Schnecken, Schieber, Austragsvorrichtungen aus dem Reaktionsraum, getaktete Absperrorgane wie beispielsweise Doppelschieberschleusen und/oder Fördervorrichtungen oder Kombinationen der vorstehenden Vorrichtungen reguliert.

Erfindungsgemäss bevorzugt erfolgt die Produkt-Wegfuhr aus dem Reaktor über eine Zellradschleuse gefolgt von einem Absperrschieber. Dadurch ergibt sich ein gleichmässiger Produktfluss. Ein Schliessen des Schiebers im Produktstrom ist verhindert.

Gemäss einer erfindungsgemässen Ausführungsform werden getaktete Absperrorgane mit einem oder mehreren dazwischen liegenden Pufferbehältern (Vorlaufbehälter) zur Produkt-Zufuhr verwendet. Hierbei werden die Pufferbehälter vorzugsweise mit einem Vakuumsystem verbunden. Bei dem Vakuumsystem kann es sich in diesem Fall um ein separates System handeln oder um das Vakuumsystem, mit welchem der Reaktionsraum verbunden ist. Im Fall der Verwendung eines separaten Vakuumsystems kann dieses gleichzeitig zum Fördern von Produkt in einen Pufferbehälter oberhalb des Reaktionsraums verwendet werden.

Die Zufuhr des Prozessgases kann sowohl direkt in den Reaktionsraum oder indirekt, nach einem Absperrorgan erfolgen. Erfindungsgemäss bevorzugt wird als Prozessgas Stickstoff eingesetzt.

Gemäss einer bevorzugten Ausführungsform der vorliegenden Erfindung ist zwischen dem Reaktionsraum beziehungsweise dem oder den Pufferbehältern und dem Vakuumsystem, vorzugsweise eine Vakuumpumpe, zumindest eine Kühlfalle angeordnet. Bei der Kühlfalle kann es sich um einen Plattenwärmetauscher, einen Rohrbündelwärmetauscher, um einen Behälter mit Mantelkühlung oder um Kühlschlangen handeln. Derartige Kühlfallen sind dem Fachmann bekannt. Insbesondere bevorzugt sind hierbei zumindest zwei Kühlfallen parallel angeordnet. Dadurch ist es möglich, eine der Kühlfallen zu entleeren und zu reinigen, während die andere Kühlfalle im Betrieb ist.

Gemäss einer weiteren Ausführungsform der vorliegenden Erfindung können ein oder mehrere Filter zwischen Reaktionsraum und Vakuumsystem angeordnet sein.

Die vorstehenden Massnahmen verhindern eine allfällige Auskondensation von Nebenprodukten im Vakuumsystem und eine dadurch verursachte Beschädigung des Systems (Korrosion, Blockierung). Durch die erfindungsgemässe Verfahrensführung ist dieses Risiko aber ohnehin bereits erheblich vermindert, so dass die vorstehenden Massnahmen nicht unbedingt notwendig sind.

Gemäss einer weiteren bevorzugten Ausführungsform der vorliegenden Erfindung weist die Kühlfalle einen Durchflusskanal für das Prozessgas sowie einen Durchflusskanal für das Kühlmedium auf. Als Kühlmedium wird hierbei vorzugsweise flüssiger verdampfender Stickstoff verwendet. Hierbei ist es insbesondere bevorzugt, den verdampfenden Stickstoff aus der Kühlfalle heraus dem Reaktionsraum zuzuführen.

Die SSP-Reaktion erfolgt unter den vorstehenden beschriebenen und in Fig. 1 dargestellten Bedingungen von Absolutdruck und Gasfluss (definiert durch den R-Wert).

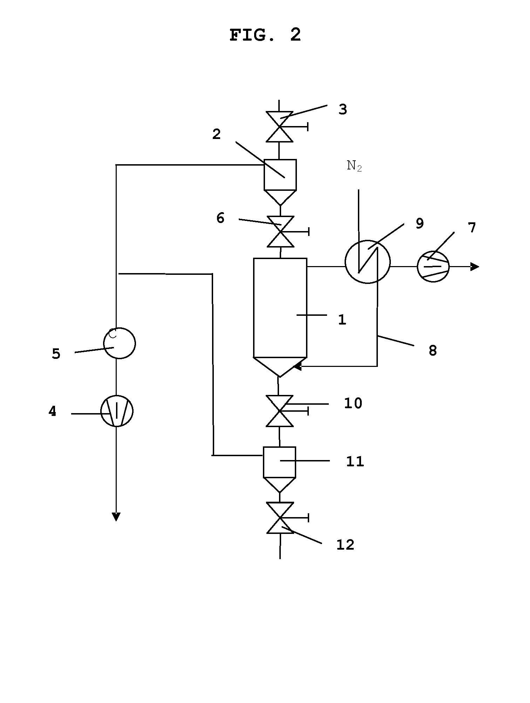

In Fig. 2 ist eine erste Ausführungsform einer erfindungsgemässen Apparatur gezeigt. Ein vertikal angeordneter Reaktor 1 enthält den Reaktionsraum, in welchem die SSP-Reaktion unter den erfindungsgemässen Bedingungen durchgeführt wird. Das zu behandelnde Material gelangt über ein getaktetes Ventil 3 in einen Vorlagebehälter (Pufferbehälter) 2. Gemäss der hier gezeigten Ausführungsform sind an den Vorlagebehälter 2 vorzugsweise bereits die erfindungsgemässen Vakuumbedingungen angelegt, wie sie auch im Reaktor 1 während der Durchführung der SSP-Reaktion herrschen und vorstehend beschrieben sind. Gemäss einer alternativen Ausführungsform der vorliegenden Erfindung kann das Vakuumniveau im Vorlagebehälter 2 aber auch vom Vakuumniveau im Reaktor 1 abweichen, insbesondere darüber liegen. Ist das Ventil 3 geöffnet, um Material in den Vorlagebehälter 2 zu lassen, entspricht das Druckniveau im Vorlagebehälter 2 ungefähr dem Druckniveau vor dem Ventil 3. Nach beendeter Materialzufuhr wird das Ventil 3 geschlossen, und der Druck im Vorlagebehälter 2 wird entsprechend eingestellt. Nach Öffnen des Ventils 6 zum Einlass des Materials in den Reaktor 1 kommt es zu einer Anpassung der Druckniveaus im Reaktor 1 und dem Vorlagebehälter 2. Nach Abschluss der Materialzufuhr in den Reaktor 1 wird das Ventil 6 für den nächsten Zyklus wieder geschlossen.

Hierzu ist gemäss dieser Ausführungsform der Vorlagebehälter 2 mit einer Vakuumpumpe 4 verbunden. Wie vorstehend beschrieben ist es auch möglich, den Vorlagebehälter 2 an das Vakuumsystem anzuschliessen, welche für die Vakuumbedingungen im Reaktor 1 sorgt. Vor der Vakuumpumpe 4 ist eine Kühlfalle 5 angeordnet, um die Vakuumpumpe 4 vor eventuell auskondensierenden Stoffen zu schützen. Optional kann vor der Vakuumpumpe (5) ein Speichervolumen (Windkessel) zum Druckausgleich angeordnet sein.

Das zu behandelnde Material wird aus dem Vorlagebehälter 2 über ein getaktetes Ventil 6 in den Reaktor 1 eingeführt. Der Reaktor 1 ist in seinem oberen Bereich (Deckenbereich) mit einer Vakuumpumpe 7 verbunden. Gemäss der hier gezeigten Ausführungsform handelt es sich bei der Vakuumpumpe 7 um ein von der Vakuumpumpe 4 für die Pufferbehälter verschiedenes Vakuumsystem. Optional kann vor der Vakuumpumpe (7) ein Speichervolumen (Windkessel) zum Druckausgleich angeordnet sein.

Der untere Bereich (Bodenbereich) des Reaktors 1 ist mit einer Zuführleitung 8 für Stickstoff als Prozessgas verbunden. Der Stickstoff wird somit im Gegenstrom zum Materialstrom durch den Reaktor 1 geführt und wird von der Vakuumpumpe 7 aus dem oberen bereich des Reaktors 1 wieder abgesaugt.

Gemäss dieser Ausführungsform dient der in den Reaktor 1 einzuleitende Stickstoff vorgängig in der Kühlfalle 9 als Kühlmedium zum Auskondensieren von gegebenenfalls für die Vakuumpumpe 7 schädlichen Stoffen. Der Stickstoff wird hierbei durch Kühlschlangen der Kühlfalle 9 geleitet, bevor er über die Leitung 8 in den Reaktor 1 gelangt. Daraus ergibt sich eine sehr effiziente Nutzung des eingesetzten Prozessgases.

Nach Durchströmen des Reaktors 1 wird das Material über ein getaktetes Ventil 10 in einen Vorlagebehälter (Pufferbehälter) 11 geführt, von wo aus es die Apparatur über das getaktete Ventil 12 verlässt. Gemäss der hier gezeigten Ausführungsform sind an den Vorlagebehälter 11 ebenfalls die erfindungsgemässen Vakuumbedingungen angelegt, wie sie auch im Reaktor 1 während der Durchführung der SSP-Reaktion herrschen und vorstehend beschrieben sind. Gemäss einer alternativen Ausführungsform der vorliegenden Erfindung kann das Vakuumniveau im Vorlagebehälter 11 aber auch vom Vakuumniveau im Reaktor 1 abweichen, insbesondere darüber liegen. Ist das Ventil 10 geöffnet, um Material in den Vorlagebehälter 11 zu lassen, kommt es zu einer Anpassung der Druckniveaus im Reaktor 1 und dem Vorlagebehälter 11. Nach Abschluss der Materialzufuhr in den Vorlagebehälter 11 wird das Ventil 10 geschlossen und das Ventil 12 geöffnet. Ist das Ventil 12 geöffnet, um Material aus den Vorlagebehälter 10 herauszuführen, entspricht das Druckniveau im Vorlagebehälter 11 ungefähr dem Druckniveau nach dem Ventil 12. Anschliessend wird das Ventil 12 für den nächsten Zyklus geschlossen, und der Druck im Vorlagebehälter 11 wird entsprechend eingestellt.

Hierzu ist gemäss dieser Ausführungsform der Vorlagebehälter 11 mit der Vakuumpumpe 4 verbunden, welche ebenfalls mit dem Vorlagebehälter 2 verbunden ist. Wie vorstehend beschrieben ist es auch möglich, den Vorlagebehälter 11 an das Vakuumsystem anzuschliessen, welche für die Vakuumbedingungen im Reaktor 1 sorgt.

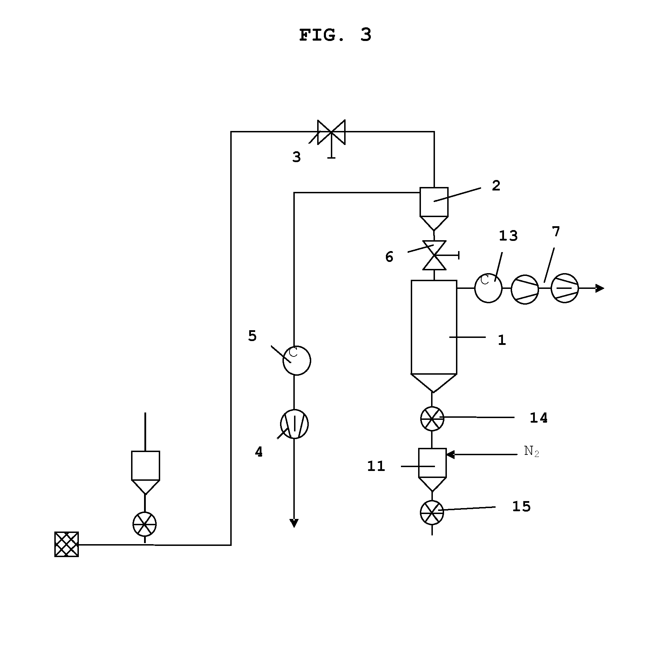

In Fig. 3 ist eine weitere Ausführungsform einer erfindungsgemäss verwendbaren Apparatur gezeigt. In den Figuren 2 und 3 sind gleiche Bauteile durch gleiche Bezugszeichen gekennzeichnet. Die Ausführungsform gemäss Fig. 3 unterscheidet sich von der Apparatur gemäss Fig. 2 dahingehend, dass die Vakuumpumpe 4 gleichzeitig als Förderpumpe zur Einführung des Materials in den Vorlagebehälter 2 dient. Weiterhin wird das Prozessgas (Stickstoff) nicht direkt in den Reaktor 1 eingespeist, sondern in den Vorlagebehälter (Pufferbehälter) 11. Im Vorlagebehälter (Pufferbehälter) 11 herrschen somit keine Vakuumbedingungen; dieser ist in der vorliegenden Ausführungsform nicht mit der Vakuumpumpe 4 verbunden. Das zugeführte Prozessgas wird auch nicht vorgängig durch eine Kühlfalle geleitet. Die Vakuumpumpe 7 (in dieser Ausführungsform eine Doppelstation-Vakuumpumpe) ist gemäss dieser Ausführungsform durch ein konventionelles Kühlfallenelement 13 vom Reaktor 1 getrennt. Optional kann vor der Vakuumpumpe (5 und/oder 7) ein Speichervolumen (Windkessel) zum Druckausgleich angeordnet sein.

Zwischen den Reaktor 1 und dem Vorlagebehälter 11 sowie nach dem Vorlagebehälter sind gemäss der hier gezeigten Ausführungsform keine getakteten Ventile angeordnet, sondern kontinuierliche Ventile (z.B. Zellradschleusen) 14 und 15. Um das Einsaugen von Luft in den Reaktor 1 zu verhindern, muss deshalb hier soviel Prozessgas in den Vorlagebehälter 11 eingeleitet werden, dass kein Luft über die Ventile 14 und 15 in den Reaktor 1 gelangen kann. Die Sperrwirkung der Ventile 14 und 15 soll dabei so eingestellt sein, dass möglichst viel Stickstoff durch Ventil 14 in den Reaktionsraum 1 strömt und möglichst wenig durch Ventil 15 nach aussen strömt. Gemäss einer bevorzugten erfindungsgemässen Ausführungsform liegt der Druck im Vorlagebehälter 11 über dem Umgebungsdruck.

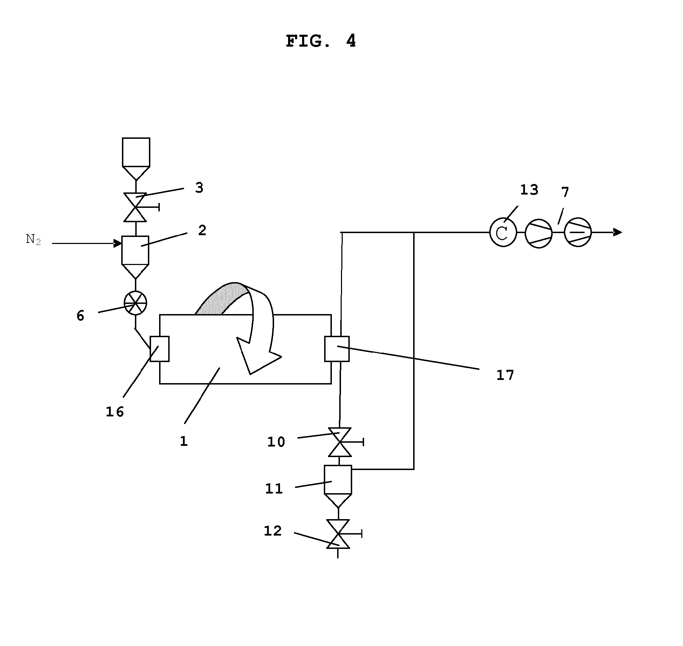

In Fig. 4 ist eine weitere Ausführungsform einer erfindungsgemäss verwendbaren Apparatur gezeigt. In den Figuren 2 bis 4 sind gleiche Bauteile durch gleiche Bezugszeichen gekennzeichnet. Die Ausführungsform gemäss Fig. 4 unterscheidet sich von der Apparatur gemäss Fig. 2 dahingehend, dass statt einem vertikalen Reaktor ein horizontaler Reaktor 1 mit einem seitlichen Materialeinlass 16 und einem seitlichen Materialauslass 17 vorgesehen ist. Dieser ist als Drehofen ausgestaltet, der sich in Richtung des in Fig. 4 gezeigten Pfeils um seine Längsachse bewegt. Zwischen dem Vorlagebehälter 2 und dem Reaktor 1 ist ein kontinuierliches Ventil (Zellradventil) 6 angeordnet. An den Materialauslass 17 ist neben dem (mit Ventilen 10 und 12 versehenen Vorlagebehälter 11) eine Vakuumpumpe 7 (hier eine Doppelstation-Vakuumpumpe) angeschlossen, welche durch ein konventionelles Kühlfallensystem 13 vom Materialauslass 17 getrennt ist. Der Vorlagebehälter 11 ist ebenfalls über das Kühlfallenelement 13 mit der Vakuumpumpe 7 verbunden. Das Prozessgas (hier Stickstoff) wird über den Vorlagebehälter 2 zugeführt. Gemäss einer bevorzugten erfindungsgemässen Ausführungsform liegt der Druck im Vorlagebehälter 2 bei offenem Absperrorgan 3 über dem Umgebungsdruck.

Im Anschluss an die SSP-Reaktion kann ein Schritt zum Kühlen der Polyester-Polymerpartikel erfolgen. Die Polyester-Polymerpartikel können dabei auf eine zur Lagerung und zum Transport geeignete Temperatur oder auf eine Temperatur zur direkten Weiterverarbeitung abgekühlt werden. Die Kühlung erfolgt dabei durch im Stand der Technik bekannte Verfahren, zum Beispiel in Plattenwärmetauschern, in Fliessbettkühlern, in Förderanlagen mit einem Überschuss an Kühlmedium, durch direkten Eintrag in eine Kühlflüssigkeit, durch Kontakt mit einer kalten Oberfläche oder durch Kombination verschiedener Kühlmethoden. Ein Teil der Kühlung kann bereits im Reaktor durch Zugabe eines kalten Gasstromes erfolgen. Bevorzugte Kühlvorrichtungen sind Fliessbettkühler oder Kühlreaktoren, durch die ein Gasstrom im Gegenstrom geführt wird.

Die Polyester-Polymerpartikel können zu verschiedenen Produkten wie zum Beispiel Fasern, Bändern, Folien oder Spritzgussteilen verarbeitet werden. Polyethylenterephthalat wird insbesondere zu Hohlkörpern, wie zum Beispiel Flaschen verarbeitet.

Die vorliegende Erfindung wird weiterhin anhand von nicht einschränkenden Beispielen näher erläutert. Wenn nachstehend nicht anderweitig definiert, bedeutet die Einheit "Nl/h" die Gasmenge, welche pro Stunde unter Normbedingungen (0°C, 101,325 kPa) einen Querschnitt durchströmt.

**Beispiel 1:**

In einem Laborreaktor mit 10 cm Durchmesser wurden 2.2 kg vorkristallisierte Granulate aus Polyethylenterephthalat mit einem Comonmergehalt von 2% IPA (Isophthalsäure) und ca. 1.5% DEG (Diethylenglykol) und einer anfänglichen intrinsischen Viskosität (IV) von 0.6 dl/g behandelt. Die Behandlung umfasste ein Vorheizen, einen Übergangsbetrieb und eine Nachkondensation (SSP). Das Vorheizen erfolgte bei Umgebungsdruck in einem heissen Stickstoffstrom über eine Stunde, bis die PET Granulate eine Temperatur von 205°C erreicht hatten. Während des Übergangsbetriebes wurde die Gasmenge während 30 Minuten schrittweise auf 10 Nl/h reduziert. Nach dem Übergangsbetrieb wurden aus der obersten Schicht 20 g Produktmuster entnommen.

Zur Nachkondensation wurde der Reaktordruck rasch auf 100 mbar abgesenkt, wobei der Stickstoffstrom bei 10 Nl/h belassen wurde. Jeweils nach 2, 4, und 8 Stunden wurden aus der obersten Schicht 20 g Produktmuster entnommen.

Mit der Versuchsdurchführung in vorstehender Batch-Anordnung können die Bedingungen eines kontinuierlichen Betriebes im oberen Teil eines Reaktors simuliert werden. In beiden Fällen durchströmt das Gas zunächst eine definierte Menge an Produkt, wobei die Konzentration des frei werdenden Ethylenglykol und Wasser aus der SSP-Reaktion ansteigt. Unter diesen Bedingungen lässt sich ein repräsentativer R-Wert für das oben liegende Produkt im Batch-Betrieb berechnen aus:

$$R = \frac{\text{Gasflussmenge} \bullet \text{Dichte des Gases} \bullet \text{Zeit}}{\text{Masse des Produkts}}$$

(Dichte $N_2$ =1.25Kg/m$^3$)

Aus dem R-Wert geteilt durch den angelegten Druck im Reaktor ergibt sich der S-Wert.

Aus den IV-Werten lässt sich für jeden Zeitabschnitt eine Reaktionsrate (IV-Anstieg pro Wurzel Zeit) berechnen:

$$\mathrm{Re}\,aktionsrate = \frac{IV - Anstieg}{\sqrt{t}}$$

Es wurden folgende Werte erhalten:

Tabelle 1

| Verweilzeit (SSP) | R-Wert | S-Wert [1/bar] | IV [dl/g] | IV-Rate [dl/g/h$^{0.5}$] |
|---|---|---|---|---|
| 0h | | | 0.640 | |
| 2h | 0.011 | 0.11 | 0.674 | 0.024 |
| 4h | 0.023 | 0.23 | 0.719 | 0.077 |
| 8h | 0.045 | 0.45 | 0.795 | 0.092 |

**Vergleichsbeispiel 1:**

Beispiel 1 wurde mit dem gleichen Ausgangsprodukt unter den gleichen Prozessbedingungen wiederholt, allerdings mit der Abweichung, dass lediglich 1 Nl/h heisser Stickstoff zugeführt wurden und dass bei einer SSP Temperatur von 208°C gearbeitet wurde.

Es ergaben sich folgende Werte

Tabelle 2

| Verweilzeit (SSP) | R-Wert | S-Wert [1/bar] | IV [dl/g] | IV-Rate [dl/g/h$^{0.5}$] |
|---|---|---|---|---|
| 0h | | | 0.644 | |
| 2h | 0.0011 | 0.011 | 0.676 | 0.023 |
| 4h | 0.0023 | 0.023 | 0.702 | 0.044 |
| 8h | 0.0045 | 0.045 | 0.756 | 0.065 |

Im Vergleich zu Beispiel 1 werden trotz der höheren SSP-Temperatur, die eigentlich zu höheren IV-Anstiegsraten führen sollte, aufgrund der tieferen R-Werte tiefere IV Raten erreicht.

Werden die IV-Raten auf eine Temperatur von 205°C umgerechnet (Basis: Halbierung der Reaktionsgeschwindigkeit bei um 13°C geringerer Temperatur), ergeben sich folgende Werte:

Tabelle 3

| Verweilzeit (SSP) | IV Rate [dl/g/h$^{0.5}$] |
|---|---|
| 0h | |
| 2h | 0.020 |
| 4h | 0.038 |
| 8h | 0.056 |

Hieraus wird ersichtlich, dass R-Werte und S-Werte unterhalb des erfinderischen Bereiches zu einem langsameren Verlauf der SSP-Reaktion führen.

**Vergleichsbeispiel 2:**

Beispiel 1 wurde mit dem gleichen Ausgangsprodukt unter den gleichen Prozessbedingungen wiederholt, allerdings mit der Abweichung, dass 400 Nl/h heisser Stickstoff zugeführt wurden und dass der Druck bei Normaldruck (1000 mbar) belassen wurde.

Es ergaben sich folgende Werte Tabelle 4:

| Verweilzeit (SSP) | R-Wert | S-Wert [l/bar] | IV [dl/g] | IV Rate [dl/g/h$^{0.5}$] |
|---|---|---|---|---|
| 0h | | | 0.647 | |
| 2h | 0.45 | 0.45 | 0.701 | 0.038 |
| 4h | 0.91 | 0.91 | 0.742 | 0.070 |
| 8h | 1.82 | 1.82 | 0.819 | 0.093 |

Im Vergleich zu Beispiel 1 wurden trotz der sehr hohen R-Werte und S-Werte, die den Bedingungen bei einer SSP-Reaktion mit Stickstoff als Prozessgas nach dem Stand der Technik entsprechen, bei 4 und 8 Stunden SSP-Reaktion keine erhöhten IV-Raten erreicht.

Hieraus wird ersichtlich, dass die im Vergleich zu Beispiel 1 um das 40-fache höhere Gasmenge zwar einen wirtschaftlichen Nachteil darstellt, allerdings nicht zu einer vorteilhaften Verfahrensführung führt.

**Vergleichsbeispiel 3:**

Beispiel 1 wurde mit dem gleichen Ausgangsprodukt unter den gleichen Prozessbedingungen wiederholt, allerdings mit der Abweichung, dass 40 Nl/h heisser Stickstoff zugeführt wurden und dass der Druck bei Normaldruck (1000 mbar) belassen wurde.

Es ergaben sich folgende Werte:

Tabelle 5:

| Verweilzeit (SSP) | R-Wert | S-Wert [l/bar] | IV [dl/g] | IV Rate [dl/g/h$^{0.5}$] |
|---|---|---|---|---|
| 0h | | | 0.645 | |
| 2h | 0.045 | 0.045 | 0.671 | 0.018 |
| 4h | 0.091 | 0.091 | 0.704 | 0.056 |
| 8h | 0.182 | 0.182 | 0.768 | 0.077 |

Im Vergleich zu Beispiel 1 wurden trotz des höheren R-Wertes, der noch über dem erfindungsgemässen Bereich liegt, aufgrund der tieferen S-Werte tiefere IV Raten erreicht.

Hieraus wird ersichtlich, dass Drücke oberhalb des erfinderischen Bereichs und somit S-Werte unterhalb des erfinderischen Bereiches zu einem langsameren Verlauf der SSP Reaktion führen.

Im Vergleich zu Vergleichsbeispiel 2 werden aufgrund der tieferen R-Werte und S-Werte tiefere IV-Raten erreicht.

Hieraus wird ersichtlich, dass bei einer Stickstoff SSP nach dem Stand der Technik eine Reduktion des R-Wertes zu einem langsameren Verlauf der SSP Reaktion führt.

## Patentansprüche

1. Verfahren zur Festphasen-Polykondensation von Polyestern, vorzugsweise Polyethylenterephthalat beziehungsweise Copolymeren davon, **dadurch gekennzeichnet, dass** die Festphasen-Polykondensation mit Polyesterprepolymerpartikeln in einem Reaktionsraum durchgeführt wird, in welchem ein Absolutdruck im Bereich von 10 mbar bis 200 mbar, vorzugsweise 20 bis 150 mbar, und ein Prozessgasfluss im Bereich eines R-Wertes von 0,005 bis 0,05 herrscht, wobei der R-Wert definiert ist als das Verhältnis von stündlich durch den Reaktionsraum strömender Prozessgasmenge (in kg) zu stündlich durch den Reaktionsraum strömender Polymermenge (in kg):

$$R = \frac{m(Gas)/h}{m(Polymer)/h} \; .$$

2. Verfahren nach Anspruch 1, **dadurch gekennzeichnet, dass** im Reaktionsraum ein S-Wert von mindestens 0,3, vorzugsweise mindestens 0,8 eingestellt ist, wobei der S-Wert definiert ist als

$$S = \frac{R}{Absolutdruck(bar)} = \frac{m(Gas)/h}{m(Polymer)/h \cdot Absolutdruck(bar)} \; .$$

3. Verfahren nach Anspruch 1 oder 2, **dadurch gekennzeichnet, dass** die Reaktion bei einer Temperatur von 180°C bis 5° unterhalb des kristallinen Schmelzpunktes der Polyesterprepolymerpartikel durchgeführt wird.

4. Verfahren nach einem der Ansprüche 1 bis 3, **dadurch gekennzeichnet, dass** die Reaktion über einen Zeitraum von zwischen 2 und 30 Stunden, vorzugsweise zwischen 6 und 20 Stunden durchgeführt wird.

5. Verfahren nach einem der Ansprüche 1 bis 3, **dadurch gekennzeichnet, dass** das Prozessgas Stickstoff ist.

6. Verfahren nach Anspruch 5, **dadurch gekennzeichnet, dass** das Prozessgas zudem als Kühlmedium in einer Kühlfalle (9) vor einem Vakuumsystem (7) zur Einstellung des Absolutdrucks im Reaktionsraum eingesetzt wird.

7. Apparatur zur Durchführung des Verfahrens gemäss einem der Ansprüche 1 bis 6, umfassend

   - einen Reaktor (1) mit einem Materialeinlass und einem Materialauslass, gegebenenfalls einer Prozessgaszuführleitung (8), und einem angeschlossenen Vakuumsystem (7),
   - Vorlagebehälter (2, 11) vor dem Materialeinlass und nach dem Materialauslass des Reaktors (1), wobei der vor oder nach dem Materialauslass des Reaktors (1) angeordnete Vorlagebehälter (2, 11) eine Prozessgaszuführleitung aufweist, wenn die Prozessgaszuführleitung (8) am Reaktor (1) nicht vorhanden ist, und
   - Absperrvorrichtungen (3, 6, 10, 12, 14) zwischen den Vorlagebehältern (2, 11) und dem Materialeinlass sowie dem Materialauslass des Reaktors (1) sowie vor und nach den Vorlagebehältern (2, 11).

8. Apparatur nach Anspruch 7, **dadurch gekennzeichnet, dass** das Vakuumsystem (7) vom Reaktor (1) durch eine Kühlfalle (9) getrennt ist, durch welche als Kühlmedium das Prozessgas vor dessen Eintritt in den Reaktor (1) über die Leitung (8) geführt wird.

9. Apparatur nach Anspruch 7 oder 8, **dadurch gekennzeichnet, dass** mindestens der vor dem Materialeinlass des Reaktors (1) angeordnete Vorlagebehälter (2) mit einem Vakuumsystem (4, 7) verbunden ist.

10. Apparatur nach Anspruch 9, **dadurch gekennzeichnet, dass** der mindestens eine Vorlagebehälter (2, 11) mit einem separaten Vakuumsystem (4) verbunden ist, welches von dem mit dem Reaktor (1) verbundenen Vakuumsystem verschieden ist.

11. Apparatur nach Anspruch 10, **dadurch gekennzeichnet, dass** das separate Vakuumsystem (4) gleichzeitig als Fördersystem für die Polyesterprepolymerpartikel in den Vorlagebehälter (2) dient.

12. Apparatur nach einem der Ansprüche 7 bis 11, **dadurch gekennzeichnet, dass** der Reaktor (1) ein vertikaler Reaktor mit einem Materialeinlass in seinem Deckenbereich und einen Materialauslass im Bodenbereich, gegebenenfalls einer Prozessgaszuführleitung (8) in den Bodenbereich des Reaktors (1), und einem an den Deckenbereich des Reaktors (1) angeschlossenes Vakuumsystem (7) ist.

13. Apparatur nach einem der Ansprüche 7 bis 11, **dadurch gekennzeichnet, dass** der Reaktor (1) ein horizontaler Reaktor mit einem seitlichen Materialeinlass (16) und einem seitlichen Materialauslass (17), gegebenenfalls einer Prozessgaszuführleitung (8), und einem an den Materialauslass (17) des Reaktors (1) angeschlossenen Vakuumsystem (7) ist.

14. Verwendung einer Apparatur gemäss einem der Ansprüche 7 bis 13 zur Durchführung eines Verfahrens zur Festphasen-Polykondensation von Polyestern, vorzugsweise Polyethylenterephthalat beziehungsweise Copolymeren davon, gemäss einem der Ansprüche 1 bis 6.

15. Verwendung nach Anspruch 14, **dadurch gekennzeichnet, dass** als Absperrvorrichtungen kontinuierliche Ventile (6, 14, 15) zwischen dem Reaktor (1) und den Vorlagebehältern (2, 11) angeordnet sind und der Druck in den Vorlagebehältern (2, 11) bei geschlossenen kontinuierlichen Ventilen(6, 14, 15) über dem Umgebungsdruck liegt.

## Claims

1. Process for the solid-state polycondensation of polyesters, preferably polyethylene terephthalate or copolymers thereof, **characterized in that** the solid-state polycondensation is carried out using polyester prepolymer particles in a reaction space in which an absolute pressure in the range from 10 mbar to 200 mbar, preferably from 20 to 150 mbar, and a process gas flow in the R value range from 0.005 to 0.05 prevails, where the R value is defined as the ratio of hourly amount of process gas (in kg) flowing through the reaction space to hourly amount of polymer (in kg) flowing through the reaction space:

$$R = \frac{m(gas)/h}{m(polymer)/h}.$$

2. Process according to Claim 1, **characterized in that** an S value of at least 0.3, preferably at least 0.8, is set in the reaction space, where the S value is defined as

$$S = \frac{R}{absolute\ pressure(bar)} = \frac{m(gas)/h}{m(polymer)/h.absolute\ pressure(bar)}.$$

3. Process according to Claim 1 or 2, **characterized in that** the reaction is carried out at a temperature of from 180°C to 5° below the crystalline melting point of the polyester prepolymer particles.

4. Process according to any of Claims 1 to 3, **characterized in that** the reaction is carried out over a period of time in the range from 2 to 30 hours, preferably from 6 to 20 hours.

5. Process according to any of Claims 1 to 3, **characterized in that** the process gas is nitrogen.

6. Process according to Claim 5, **characterized in that** the process gas is additionally used as cooling medium in a cold trap (9) upstream of a vacuum system (7) to set the absolute pressure in the reaction space.

7. Apparatus for carrying out the process according to any of Claims 1 to 6, which comprises

- a reactor (1) having a materials inlet and a materials outlet, optionally a process gas feed line (8), and a connected vacuum system (7),

- reservoirs (2, 11) upstream of the materials inlet and downstream of the materials outlet of the reactor (1), with the reservoir (2, 11) arranged upstream or downstream of the materials outlet of the reactor (1) having a process gas feed line when the process gas feed line (8) is not present on the reactor (1), and

- shutoff devices (3, 6, 10, 12, 14) between the reservoirs (2, 11) and the materials inlet and the materials outlet of the reactor (1) and also upstream and downstream of the reservoirs (2, 11).

8. Apparatus according to Claim 7, **characterized in that** the vacuum system (7) is separated from the reactor (1) by a cold trap (9) through which the process gas is conveyed as cooling medium via the line (8) before entering the reactor (1).

9. Apparatus according to Claim 7 or 8, **characterized in that** at least the reservoir (2) arranged upstream of the materials inlet of the reactor (1) is connected to a vacuum system (4, 7).

10. Apparatus according to Claim 9, **characterized in that** the at least one reservoir (2, 11) is connected to a separate vacuum system (4) which is different from the vacuum system connected to the reactor (1).

11. Apparatus according to Claim 10, **characterized in that** the separate vacuum system (4) simultaneously serves as transport system for the polyester prepolymer particles into the reservoir (2).

12. Apparatus according to any of Claims 7 to 11, **characterized in that** the reactor (1) is a vertical reactor having a materials inlet in its lid region and a materials outlet in the bottom region, optionally a process gas feed line (8) in the bottom region of the reactor (1), and a vacuum system (7) connected to the lid region of the reactor (1).

13. Apparatus according to any of Claims 7 to 11, **characterized in that** the reactor (1) is a horizontal reactor having a lateral materials inlet (16) and a lateral materials outlet (17), optionally a process gas feed line (8), and a vacuum system (7) connected to the materials outlet (17) of the reactor (1).

14. Use of an apparatus according to any of Claims 7 to 13 for carrying out a process for the solid-state polycondensation of polyesters, preferably polyethylene terephthalate or copolymers thereof, according to any of claims 1 to 6.

15. Use according to Claim 14, **characterized in that** continuous valves (6, 14, 15) are arranged as shutoff devices between the reactor (1) and the reservoirs (2, 11) and the pressure in the reservoirs (2, 11) is above ambient pressure when the continuous valves (6, 14, 15) are closed.

## Revendications

1. Procédé de polycondensation en phase solide de polyesters, de préférence de polyéthylène téréphtalate ou de copolymères de celui-ci, **caractérisé en ce que** l'on accomplit la polycondensation en phase solide avec des particules de prépolymères de polyester dans une chambre de réaction, dans laquelle il règne une pression absolue comprise dans la plage de 10 mbar à 200 mbar, de préférence de 20 à 150 mbar, et un flux de gaz de traitement dans la plage d'une valeur R de 0,005 à 0,05, dans lequel la valeur R est définie comme le rapport entre la quantité de gaz de traitement (en kg) s'écoulant par heure à travers la chambre de réaction et la quantité de polymère (en kg) s'écoulant par heure à travers la chambre de réaction:

$$R = \frac{m(gaz)/h}{m(polymère)/h}.$$

2. Procédé selon la revendication 1, **caractérisé en ce qu'**une valeur S d'au moins 0,3, de préférence d'au moins 0,8, est réglée dans la chambre de réaction, dans lequel la valeur S est définie comme suit:

$$S = \frac{R}{pression\,absolue(bar)} = \frac{m(gaz)/h}{m(polymère)/h \cdot pression\,absolue(bar)}.$$

**3.** Procédé selon la revendication 1 ou 2, **caractérisé en ce que** l'on accomplit la réaction à une température de 180°C à 5°C inférieure à la température de fusion cristalline des particules de prépolymères de polyester.

**4.** Procédé selon l'une quelconque des revendications 1 à 3, **caractérisé en ce que** l'on accomplit la réaction pendant une durée comprise entre 2 et 30 heures, de préférence entre 6 et 20 heures.

**5.** Procédé selon l'une quelconque des revendications 1 à 3, **caractérisé en ce que** le gaz de traitement est l'azote.

**6.** Procédé selon la revendication 5, **caractérisé en ce que** l'on utilise le gaz de traitement en plus comme fluide de refroidissement dans un piège de refroidissement (9) avant un système sous vide (7) pour le réglage de la pression absolue dans la chambre de réaction.

**7.** Appareillage pour la mise en oeuvre du procédé selon l'une quelconque des revendications 1 à 6, comprenant:

- un réacteur (1) avec une entrée de matières et une sortie de matières, éventuellement une conduite d'arrivée de gaz de traitement (8), et un système sous vide (7) qui y est raccordé,
- des réservoirs de stockage (2, 11) avant l'entrée de matières et après la sortie de matières du réacteur (1), dans lequel le réservoir de stockage (2, 11) disposé avant ou après la sortie de matières du réacteur (1) présente une conduite d'arrivée de gaz de traitement, lorsque la conduite d'arrivée de gaz de traitement (8) n'est pas présente sur le réacteur (1), et
- des dispositifs d'arrêt (3, 6, 10, 12, 14) entre les réservoirs de stockage (2, 11) et l'entrée de matière ainsi que la sortie de matières du réacteur (1) ainsi qu'avant et après les réservoirs de stockage (2, 11).

**8.** Appareillage selon la revendication 7, **caractérisé en ce que** le système sous vide (7) est séparé du réacteur (1) par un piège de refroidissement (9), à travers lequel le gaz de traitement en tant que fluide de refroidissement est conduit via la conduite (8) avant son entrée dans le réacteur (1).

**9.** Appareillage selon la revendication 7 ou 8, **caractérisé en ce qu'**au moins le réservoir de stockage (2) disposé avant l'entrée de matières du réacteur (1) est relié à un système sous vide (4, 7).

**10.** Appareillage selon la revendication 9, **caractérisé en ce que** ledit au moins un réservoir de stockage (2, 11) est relié à un système sous vide séparé (4), qui est différent du système sous vide raccordé au réacteur (1).

**11.** Appareillage selon la revendication 10, **caractérisé en ce que** le système sous vide séparé (4) sert en même temps de système de transport pour les particules de prépolymères de polyester dans le réservoir de stockage (2).

**12.** Appareillage selon l'une quelconque des revendications 7 à 11, **caractérisé en ce que** le réacteur (1) est un réacteur vertical avec une entrée de matières dans sa région de plafond et une sortie de matières dans la région du fond, éventuellement une conduite d'arrivée de gaz de traitement (8) dans la région du fond du réacteur (1), et un système sous vide (7) raccordé à la région de plafond du réacteur (1).

**13.** Appareillage selon l'une quelconque des revendications 7 à 11, **caractérisé en ce que** le réacteur (1) est un réacteur horizontal avec une entrée de matières latérale (16) et une sortie de matières latérale (17), éventuellement une conduite d'arrivée de gaz de traitement (8), et un système sous vide (7) raccordé à la sortie de matières (17) du réacteur (1).

**14.** Utilisation d'un appareillage selon l'une quelconque des revendications 7 à 13 pour la mise en oeuvre d'un procédé de polycondensation en phase solide de polyesters, de préférence de polyéthylène téréphtalate ou de copolymères de celui-ci, selon l'une quelconque des revendications 1 à 6.

**15.** Utilisation selon la revendication 14, **caractérisée en ce que** des soupapes continues (6, 14, 15) sont disposées comme dispositifs d'arrêt entre le réacteur (1) et les réservoirs de stockage (2, 11) et la pression dans les réservoirs de stockage (2, 11) est supérieure à la pression atmosphérique lorsque les soupapes continues (6, 14, 15) sont fermées.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3756990 A
- EP 0810250 B1
- US 4876326 A
- WO 2007116022 A
- US 3960817 A
- WO 2004106025 A
- WO 0023497 A
- WO 0105566 A
- WO 05087838 A
- WO 03054063 A
- WO 9622179 A
- EP 0541674 B1
- CH 2008000389 W
- EP 01789469 B1
- EP 1425146 A2
- DE 10225075 A1
- EP 1337321 B1
- US 6010667 A
- DE 102007031653 A1

**In der Beschreibung aufgeführte Nicht-Patentliteratur**

- Modern Polyesters. Wiley, 2003, 153-244
- Modern Polyesters. Wiley, 2003, 234
- Modern Polyesters. Wiley, 2003